**Europäisches Patentamt**

(19) **European Patent Office**

**Office européen des brevets**

(11) Veröffentlichungsnummer: **0 132 574**
**B1**

(12) **EUROPÄISCHE PATENTSCHRIFT**

(45) Veröffentlichungstag der Patentschrift:
27.08.86

(21) Anmeldenummer: **84106921.4**

(22) Anmeldetag: **16.06.84**

(51) Int. Cl.⁴: **F 16 C 11/06**

(54) **Kugelgelenk.**

(30) Priorität: **23.07.83 DE 3326586**

(43) Veröffentlichungstag der Anmeldung:
**13.02.85 Patentblatt 85/7**

(45) Bekanntmachung des Hinweises auf die Patenterteilung:
**27.08.86 Patentblatt 86/35**

(84) Benannte Vertragsstaaten:
**AT BE DE FR GB IT NL SE**

(56) Entgegenhaltungen:
**DE - A - 1 916 579**
**DE - B - 1 098 381**

(73) Patentinhaber: **TRW Ehrenreich GmbH & Co. KG,
Hansa-Allee 190, D-4000 Düsseldorf 11 (DE)**

(72) Erfinder: **Ito, Eiichi, Am Eisenbrand 20,
D-4005 Meerbusch 1 (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

ACTORUM AG

## Beschreibung

Gegenstand der Erfindung ist ein Kugelgelenk für Kraftfahrzeuge mit einer zwischen einem Gelenkgehäuse und einem Kugelkopf eingesetzten Lagerschale mit einer den Äquator des Kugelkopfes übergreifenden Hälfte angeordneten, meridional verlaufenden Schlitzen und mit einem die Zungen dieser Lagerschale übergreifenden Spannring.

Aus der DE-C-24 34 490 ist ein Kugelgelenk mit zwei halbsphärischen Lagerschalen bekannt, wobei auf der Innenseite einer dieser beiden Lagerschalen noch eine dünne Innenschale aus hartelastischem Kunststoff eingesetzt ist. Die Lagerschale besteht also insgesamt aus drei halbsphärischen Lagerschalen. Außerdem stoßen die Lagerschalen in der Äquatorebene des Kugelkopfes stumpf aufeinander. Deshalb ist es erforderlich, das Gelenkgehäuse mit geringen Fertigungstoleranzen herzustellen, damit das daraus montierte Kugelgelenk nicht zu schwergängig ist.

Aus dem DE-U-18 26 871 ist ein Kugelgelenk für Kraftfahrzeuge mit einer zwischen einem Gelenkgehäuse und einem Kugelkopf eingesetzten Lagerschale mit in einer den Äquator des Kugelkopfes übergreifenden Hälfte angeordneten, meridional verlaufenden Schlitzen und mit einem die Zungen dieser Lagerschale übergreifenden Spannring bekannt. Der Spannring kann in das offene Ende des Gelenkgehäuses eingeschraubt und unterschiedlich stark gegen die Zungen der Lagerschale angezogen werden, um die Gängigkeit des Kugelgelenkes verändern zu können. Nachteilig ist bei diesem bekannten Kugelgelenk, daß eine Sicherung des Spannringes gegen Lösen aus dem Gelenkgehäuse nicht vorgesehen ist.

Aus dem DE-U-76 24 430 ist ein Kugelgelenk für Kraftfahrzeuge bekannt, dessen Gelenkgehäuse auf einer Seite der Äquatorebene mit in Meridianrichtung verlaufenden Schlitzen versehen ist und auf seiner Außenseite einen Konus bildet, der von einem entsprechenden Spannring aus Kunststoff übergriffen wird. Mittels eines Umfangsflansches kann das Gehäuse unter Zwischenlage von Distanzstücken an einer Platte befestigt werden, wobei die Stärke der verwendeten Distanzstücke den Anpreßdruck des Spannringes gegen die Zungen des Gehäuses bestimmt.

Aus der DE-A-19 07 215 ist ein Kugelgelenk mit einer zwischen einem Gelenkgehäuse und einem Kugelkopf eingesetzten Lagerschale mit meridional verlaufenden Schlitzen und mit von beiden Seiten her eingesetzten Spannringen bekannt, von denen einer auch die Zungen der Lagerschale übergreift.

Schließlich ist aus der DE-A-20 57 513 noch ein Kugelgelenk zwischen einem Gelenkgehäuse und einem Kugelkopf eingesetzten Lagerschale mit in meridionaler Richtung verlaufenden Schlitzen bekannt. Irgendwelche Spannringe sind bei diesem Stand der Technik nicht vorgesehen.

Davon ausgehend liegt der Erfindung die Aufgabe zugrunde, ein einfach konstruiertes Kugelgelenk zu schaffen, mit dem unter Beibehaltung einer guten Schmiermittelverteilung größere Fertigungstoleranzen des Gelenkgehäuses überbrückt werden können, um bei der Serienproduktion trotz unterschiedlicher Axialverspannung bei der Montage möglichst gleich große Kippmomente zu erreichen.

Zur technischen Lösung dieser Aufgabe wird vorgeschlagen, daß bei einem gattungsgemäß ausgebildeten Kugelgelenk der Spannring auf seiner Innenseite umlaufende Rillen besitzt und am äußeren Rand mit Ausnehmungen versehen ist.

Bei einem nach dieser technischen Lehre ausgebildeten Kugelgelenk stoßen die Lagerschale und der Spannring nicht stumpf aufeinander, sondern werden auf einem relativ großen Bereich keilförmig übereinander geschoben, so daß bei der Axialverspannung des Kugelgelenkes Fertigungstoleranzen des Gelenkgehäuses überbrückt werden können, ohne die zulässige Streubreite des Kippmomentes zu überschreiten. Diese Wirkung wird dadurch verbessert, daß die äußere Lagerschale auf ihrer Innenseite mit umlaufenden Rillen und an ihrem äußeren Rand mit Ausnehmungen versehen wird. Die meridional verlaufenden Schlitze der inneren Lagerschale und die umlaufenden Rillen des Spannringes bilden ein sich kreuzendes Hohlraumsystem, welches einerseits eine Ausweichmöglichkeit für das überschüssige Material der Lagerschale und des Spannringes bei einem beispielsweise etwas zu klein geratenen Gelenkgehäuse bieten und andererseits ein den Kugelkopf in einer Äquatorhälfte umgebendes Schmiernutenlabyrinth bilden, welches eine ideale Fettverteilung ermöglicht.

Bei einem erfindungsgemäß ausgebildeten Kugelgelenk werden die innere, dem Kugelkopf anliegende und dem Verschleiß ausgesetzte Lagerschale zweckmäßig aus einem hartelastischen Kunststoff, beispielsweise Polyoxymethylen (POM), und der Spannring zweckmäßig aus einem weichelastischen Kunststoff, beispielsweise Polyurethan (PUR) hergestellt. In Verbindung mit der erfindungsgemäßen Konstruktion beider Lagerschalen ermöglicht diese Materialpaarung eine optimale Ausnutzung der erfindungsgemäßen Wirkungen, wobei der Spannring die Funktion eines Puffers übernimmt.

Weitere Einzelheiten und Vorteile des Gegenstandes der Erfindung ergeben sich aus der nachfolgenden Beschreibung der zugehörigen Zeichnungen. In den Zeichnungen zeigen:

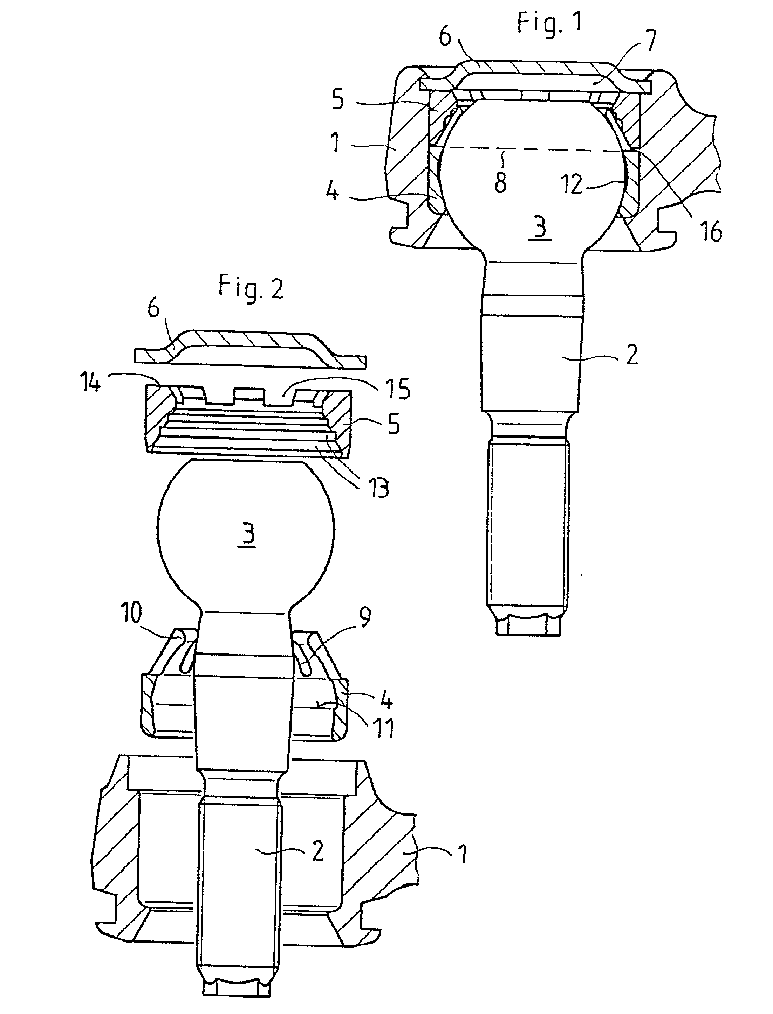

Fig. 1 ein Kugelgelenk im montierten Zustand und im Längsschnitt;

Fig. 2 dasselbe Kugelgelenk als Sprengbild;

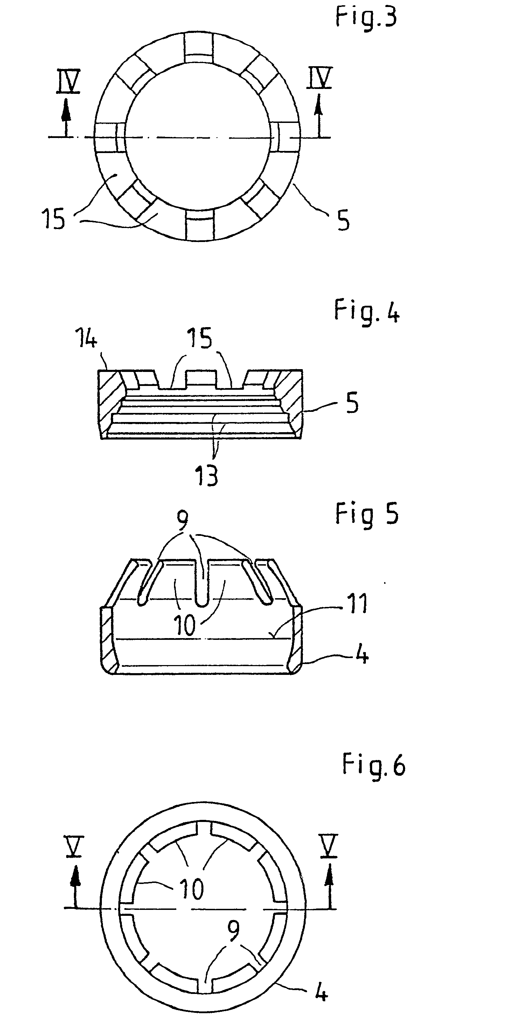

Fig. 3 der Spannring in Draufsicht;

Fig. 4 der Spannring entlang der Linie IV-IV in Fig. 3 geschnitten;

Fig. 5 die Lagerschale entlang der Linie V-V in Fig. 6 geschnitten;

Fig. 6 dieselbe innere Lagerschale in Ansicht von unten.

In einem Gelenkgehäuse 1 ist ein Kugelzapfen 2 mit einem Kugelkopf 3 unter Zwischenlage einer Lagerschale 4 und eines Spannringes 5 angeordnet. An seiner Oberseite ist das Kugelgelenk mit einer eingewalzten Kappe 6 verschlossen, unter der sich ein Fettreservoir 7 befindet.

Die dem Kugelkopf 3 anliegende Lagerschale 4 ist oberhalb eines gedachten Äquators 8 mit Schlitzen 9 versehen, die zwischen sich elastische Zungen 10 bilden, deren Wandstärke geringer ist als in dem unteren, geschlossenen Teil der Lagerschale 4. Um die Elastizität des unteren, geschlossenen Teiles der Lagerschale 4 zu vergrößern, ist etwa in der Mitte ein umlaufender Falz vorgesehen, über den sich im montierten Zustand eine umlaufende Schmiertasche 12 bildet.

Der Spannring 5 ist im Querschnitt keilförmig gestaltet und besitzt auf seiner Innenseite umlaufende Rillen 13. An seinem oberen Rand 14 ist der Spannring 5 mit Ausnehmungen 15 versehen. Außerdem sind die zwischen den Ausnehmungen 15 stehengebliebenen Randteile angeschrägt.

Bei der Montage des Kugelgelenkes wird der im Querschnitt keilförmig gestaltete Spannring 5 über den geschlitzten Bereich der Lagerschale 4 geschoben. Dabei kann das überschüssige Material der Lagerschale 4 und des Spannringes 5 in die von den Schlitzen 9 und den Rillen 13 gebildeten Hohlräume verdrängt werden. Die Querschnitte der Lagerschale 4 und des Spannringes 5 werden zweckmäßig so auf die Innenmaße des Gelenkgehäuses 1 abgestimmt, daß auch im montierten Zustand eine stumpfe Anlage in der Ebene des Äquators 8 vermieden wird und immer noch ein geringer Spalt 16 offen bleibt.

Mit den Ausnehmungen 15 und den Anschrägungen der zwischen diesen liegenden Randteile wird die Elastizität des Spannringes 5 weiter verbessert, so daß auch verhältnismäßig große Fertigungstoleranzen des Gelenkgehäuses 1 ohne eine Überschreitung der Bandbreite des zulässigen Kippmomentes ausgeglichen werden können.

Das Ergebnis der Erfindung ist ein Kugelgelenk, welches eine ideale Schmiermittelverteilung besitzt und durch seine besondere Leichtgängigkeit eine große Lebensdauer hat.

## Patentansprüche

1. Kugelgelenk für Kraftfahrzeuge mit einer zwischen einem Gelenkgehäuse (1) und einem Kugelkopf (3) eingesetzten Lagerschale (4) mit in einer den Äquator des Kugelkopfes (3) übergreifenden Hälfte angeordneten, meridional verlaufenden Schlitzen (9) und mit einem die Zungen (10) dieser Lagerschale (4) übergreifenden Spannring (5), dadurch gekennzeichnet, daß der Spannring (5) auf seiner Innenseite umlaufende Rillen (13) besitzt und am äußeren Rand (14) mit Ausnehmungen (15) versehen ist.

2. Kugelgelenk nach Anspruch 1, dadurch gekennzeichnet, daß der zwischen den Ausnehmungen (15) vorstehende Rand (14) des Spannringes (5) angeschrägt ist.

3. Kulgelgelenk nach den Ansprüchen 1 und 2, dadurch gekennzeichnet, daß die Lagerschale (4) aus einem hartelastischen Kunststoff, beispielsweise Polyoxymethylen (POM), und der Spannring (5) aus einem weichelastischen Kunststoff, beispielsweise Polyurethan (PUR) bestehen.

## Claims

1. Ball-and-socket joint for motor vehicles with a bearing shell (4) inserted between a joint housing (1) and a ball head (3), which shell has meridionally-extending slits (9) disposed in a half overlapping the equator of the ball head (3), and which has a tension ring (5) overlapping the tongues (10) of said bearing shell (4) characterised in that the tension ring (5) has grooves (13) running around its inner side, and is provided with recesses (15) on its outside edge (14).

2. Ball-and-socket joint according to claim 1, characterised in that the edge (14) of the tension ring (5) extending between the recesses (15) is bevelled.

3. Ball-and-socket joint according to claims 1 and 2, characterised in that the bearing shell (4) consists of a hard resilient plastics material, e.g. polyoxymethylene (POM), and the tension ring (5) consists of a soft resilient plastics material, e.g. polyurethane (PUR).

## Revendications

1. Articulation à rotule pour véhicules automobiles, avec un palier enveloppe (4) inséré entre un boîtier d'articulation (1) et une tête de rotule (3) et qui présente des fentes méridiennes (9) sur la moitié supérieure à l'équateur de la tête de rotule (3) et avec une bague de tension (5) chevauchant les languettes (10) de ce palier enveloppe (4), caractérisée en ce que la bague de tension (5) possède des nervures (13) sur sa face intérieure et est pourvue d'entailles (15) sur son bord extérieur (14).

2. Articulation à rotule selon la revendication 1, caractérisée en ce que le bord (14) de la bague de tension (5) en saillie entre les entailles (15) est chanfreiné.

3. Articulation à rotule selon les revendications 1 et 2, caractérisée en ce que le palier enveloppe (4) est constitué en une matière synthétique élastique dure, par exemple en polyoxyméthylène (POM), et la bague de tension (5) en une matière synthétique élastique molle, par exemple en polyuréthanne (PUR).

Fig. 1

6 7

5

1

4

8 12

3

16

2

Fig. 2

6

14 15

5

13

3

10 9

4

11

2

1

Fig.3

Fig.4

Fig 5

Fig.6

15

5

14    15

5

13

9

10    11

4

10

9

4

IV    IV

V    V